# FASCICULE DE BREVET EUROPEEN

(11) **EP 1 416 203 B1**
(45) Date de publication et mention de la délivrance du brevet: **28.09.2005**
(21) Numéro de dépôt: 03292692.5
(22) Date de dépôt: 28.10.2003
(51) Int. Cl.: F16J 15/52, E21D 9/06

(54) **Agencement de joint d'étanchéité pour pièces susceptibles d'effectuer un mouvement relatif de va-et-vient et système de tunnelier utilisant un tel agencement**
Dichtungsanordnung für Teile, die sich hin- und her relative zu einander bewegen, und Tunnelvortriebsvorrichtung mit einer solchen Dichtungsanordnung
Sealing arrangement for parts moving reciprocatingly with respect to each other and tunneling system using the same

(30) Priorité: 30.10.2002 FR 0213637
(43) Date de publication de la demande: 06.05.2004
(73) Titulaire: Entreprise la Coccinelle, 95570 Baillet-en-France (FR)
(72) Inventeur: Bresso, Claude, 95160 Montmorency (FR)
(74) Mandataire: Thinat, Michel

(56) Documents cités:
- DE-B- 2 838 485
- NL-A- 7 701 535
- US-A- 3 530 566
- US-A- 4 398 845
- PATENT ABSTRACTS OF JAPAN vol. 013, no. 153 (M-813), 13 avril 1989 (1989-04-13) -& JP 63 312502 A (YASUYUKI OKUDA), 21 décembre 1988 (1988-12-21)
- PATENT ABSTRACTS OF JAPAN vol. 2003, no. 02, 5 février 2003 (2003-02-05) -& JP 2002 309887 A (FUKUDA CORP), 23 octobre 2002 (2002-10-23)
- PATENT ABSTRACTS OF JAPAN vol. 2000, no. 15, 6 avril 2001 (2001-04-06) -& JP 2000 356093 A (KIDOH CONSTRUCTION CO LTD), 26 décembre 2000 (2000-12-26)
- PATENT ABSTRACTS OF JAPAN vol. 1999, no. 10, 31 août 1999 (1999-08-31) -& JP 11 141274 A (TOKO KENSETSU:KK;SHOKO SANGYO:KK; HONNA SAICHIRO), 25 mai 1999 (1999-05-25)

## Description

L'invention concerne un agencement de joint d'étanchéité pour pièces susceptibles d'effectuer un mouvement relatif de va-et-vient, comprenant un premier élément cylindrique externe solidaire de la première pièce, un deuxième élément cylindrique interne solidaire de la deuxième pièce et disposé coaxialement et télescopiquement mobile à l'intérieur du premier élément, et un organe d'étanchéité formé par un élément tubulaire axialement extensible et rétractable à la manière d'un accordéon et fixé à une extrémité au premier élément et à l'autre extrémité au deuxième élément. Un tel agencement de joint d'étancheité est connu par exemple des documents JP 6 331 502 et NL 7 701 535.

Selon l'invention, l'organe d'étanchéité est situé à l'intérieur du premier et du second élement cylindrique et est disposé à l'intérieur d'un espace annulaire de volume variable, délimité par des chemises internes coaxiales solidaires respectivement de l'élément interne et de l'élément externe.

Selon une caractéristique de l'invention, l'organe d'étanchéité est formé par un élément tubulaire en toile étanche pliable en accordéon, les lignes de pliage étant en forme de cercles coaxiaux à l'axe de cet élément tubulaire.

Selon encore une autre caractéristique de l'invention, l'espace annulaire de volume variable en fonction du mouvement de va-et-vient des deux pièces précitées est rempli d'un liquide, avantageusement de l'huile, une boîte d'expansion étant prévue pour recevoir l'huile chassée lors d'une rétraction de la chambre.

Selon encore une autre caractéristique de l'invention, un dispositif d'étanchéité est interposé entre des faces en regard des deux segments cylindriques et des chemises de délimitation de l'espace annulaire du logement de l'organe d'étanchéité.

Selon encore une autre caractéristique de l'invention, un joint d'étanchéité comporte une pluralité d'anneaux souples, en un matériau élastiquement déformable, qui sont disposés dans des rainures pratiquées dans une des faces précitées et décalées les unes des autres dans l'axe de cette face, et en contact permanent avec la face en regard de celle qui porte les anneaux d'étanchéité.

Selon encore une autre caractéristique de l'invention, l'espace interne de l'anneau est rempli d'un liquide tel que de l'huile de façon que la compression de l'anneau dans une zone sous l'effet d'un pivotement relatif entre les deux faces en regard provoque une expansion de l'anneau dans la portion périphérique diamétralement opposée à la zone de compression.

Selon encore une autre caractéristique de l'invention, l'organe d'étanchéité est formé par l'élément tubulaire en toile étanche renforcée par une ossature métallique.

Un système de tunnelier selon l'invention comportant une pluralité de modules axialement alignés dont l'un est de longueur variable, est caractérisé en ce que le module de longueur variable (5) comporte un agencement d'étanchéité susmentionné.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :
- la figure 1 est une vue en coupe axiale schématique, simplifiée d'un système de tunnelier de creusage de galeries dans un sol, donné à titre d'exemple d'une application d'un agencement de joint d'étanchéité connu, montré en B dans sa position de rétraction axiale ;
- la figure 2 montre le système de tunnelier selon la figure 1, avec l'agencement de joint d'étanchéité B, connu, dans sa position d'extension ;
- la figure 3 est une vue en coupe axiale d'un agencement de joint d'étanchéité B selon l'invention, montrant celui-ci en détails, dans sa position d'extension axiale ;
- la figure 4 est une vue similaire à la figure 3, mais montre l'agencement de joint d'étanchéité dans sa position de rétraction axiale ; et
- la figure 5 est une vue en coupe axiale d'un dispositif d'étanchéité à articulation.

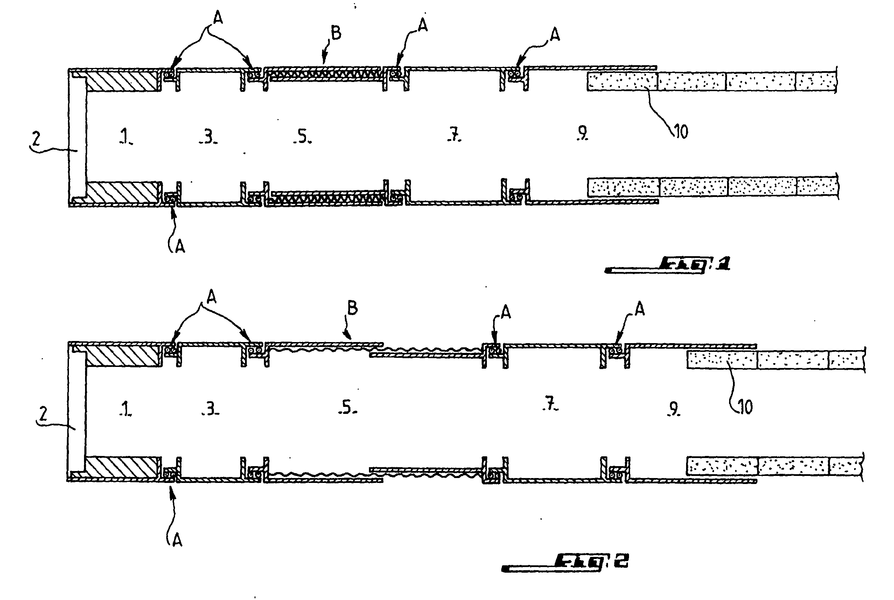

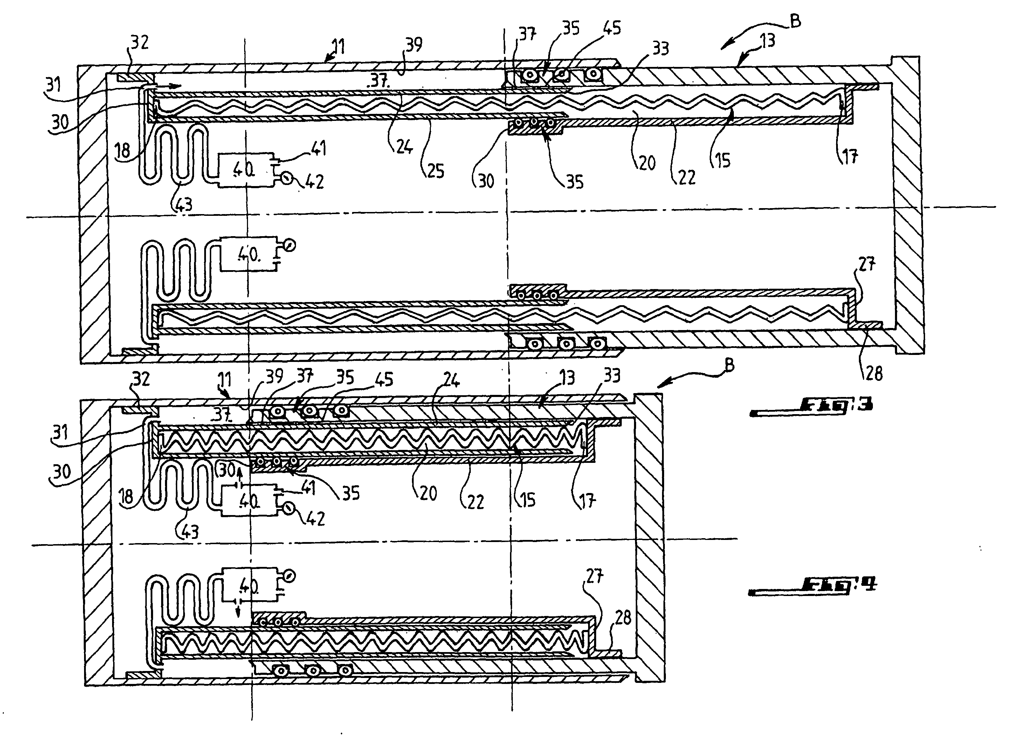

Les figures 1 et 2 illustrent, à titre d'exemple d'une application d'un agencement de joint d'étanchéité connu, appliqué à un système de tunnelier de creusage de galeries dans un sol, qui comporte une pluralité de modules axialement alignés, à savoir un premier module 1 dont l'extrémité avant comporte une roue de coupe ou d'abattage 2, un second module 3 de dégagement des débris produits par la roue de coupe, un troisième module 5 dont la longueur est télescopiquement variable selon un mouvement de va-et-vient et qui est équipé d'un agencement de joint d'étanchéité B , un quatrième module érecteur 7 et un cinquième module 9 de pose des voussoirs 10. Entre deux modules adjacents est disposé un dispositif d'articulation A formé par un agencement de joint d'étanchéité à articulation.

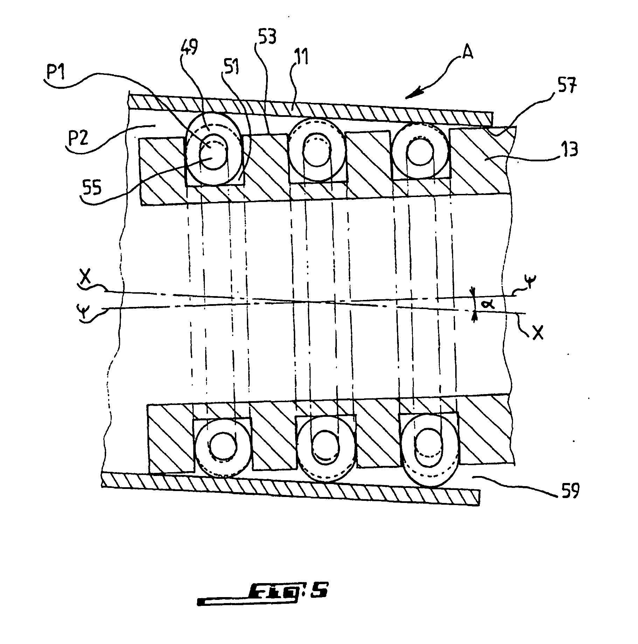

Les figures 3 et 4 montrent, en détails, l'agencement de joint d'étanchéité B, selon l'invention, dans ses positions d'extension axiale maximale et de rétraction axiale maximale.

Sur les figures 3 et 4, les deux pièces qui sont susceptibles d'effectuer un mouvement télescopique de va-et-vient sont constitués de deux segments tubulaires cylindriques coaxiaux, respectivement radialement extérieur 11 et radialement intérieur 13. Entre les deux segments tubulaires 11 et 13 est disposé un organe d'étanchéité 15, de longueur axiale variable, qui est fixé à une extrémité 17 au segment radialement interne 13 et à son autre extrémité 18 au segment radialement externe 11. L'organe d'étanchéité 15, de forme générale tubulaire, est extensible et rétractable à la manière d'un accordéon et est avantageusement formé par une toile métallique pliable en accordéon, les lignes de pliage étant en forme de cercles coaxiaux à l'axe des pièces 11 et 13. Cette toile est étanche, c'est-à-dire en un matériau imperméable, et peut être renforcée par une ossature métallique.

L'organe d'étanchéité en accordéon 15 est disposé dans un espace annulaire 20, formé par une chemise coaxiale interne 22 du segment tubulaire 13 et deux chemises coaxiales 24, 25 disposées coaxialement à l'intérieur du segment 11. La chemise 22 comporte à son extrémité adjacente à l'extrémité extérieure du segment 13 une bride 27 qui s'étend perpendiculairement radialement vers l'extérieur et assure la fixation de la chemise à la face intérieure du segment 13 par un rebord de fixation annulaire 28 en appui contre la face du segment. L'extrémité opposée 30 de la chemise 22 est libre.

Les deux chemises coaxiales 24, 25 sont solidaires, du côté de l'extrémité extérieure du segment cylindrique 11 de la branche perpendiculaire à l'axe des chemises d'une cornière annulaire 32 fixée par son autre branche 32 à la face interne du segment 11. L'espace annulaire formé par les deux chemises coaxiales 24, 25 est ouvert aux autres extrémités 33 des chemises.

Comme le montre les figures, l'extrémité 18 de l'organe d'étanchéité 15 en forme d'accordéon est fixé à la branche 30 de la cornière 31 tandis que l'autre extrémité 17 de cet organe est fixé à la pièce annulaire 27 solidaire du segment cylindrique 13.

Comme on le voit également sur les figures 3 et 4, l'extrémité 33 de l'ensemble formé par les chemises coaxiales 24, 25 pénètre télescopiquement dans l'espace annulaire délimité par le segment cylindrique 13 et la chemise 22 coaxiale à ce segment.

Pour assurer l'étanchéité entre, d'une part, les faces périphériques en regard des deux segments cylindriques 11, 13 et, d'autre part, les faces en regard des chemises 25 et 22, l'invention prévoit un dispositif d'étanchéité entre chaque paire de surface. Ces dispositifs désignés par la même référence générale 35 sont avantageusement du même type et sont décrits plus loin.

L'espace annulaire 37 délimité entre le segment extérieur 11 et sa chemise coaxiale extérieure 24 est rempli d'un liquide tel que de l'huile. Etant donné que l'espace 37 est de volume variable, il communique avec deux boîtes d'expansion pour l'huile indiquées en 40, par l'intermédiaire d'un tuyau en forme d'un labyrinthe 41. Chaque boîte d'expansion 40 est pourvue d'une soupape de sécurité 41 et d'un manomètre 42. L'espace annulaire 20 dans lequel est disposé l'organe d'étanchéité 15 communique avec l'espace 37 alimenté en huile à travers une fente de communication 45 subsistant entre la chemise 24 et le segment 13.

Concernant les boîtes d'expansion d'huile 40, elles doivent avoir un volume qui est égal à la différence des volumes des chambres 20 et 37 entre les positions d'extension maximale et de rétraction maximale de l'organe d'étanchéité 15, illustré sur les figures 3 et 4. En effet, lorsque le segment 13 se déplace de sa position selon la figure 3 dans sa position de pénétration maximale à l'intérieur du segment 11 de la figure 4, de l'huile est chassée des espaces annulaires 20 et 37. Cette huile sera stockée dans les boîtes d'expansion 40.

En se référant à la figure 5, on décrira ci-après un mode de réalisation avantageux des dispositifs d'étanchéité 35 prévu au niveau des extrémités coopérantes des segments 11, 13 et des chemises coaxiales 22, 24 et 25. Ce dispositif d'étanchéité présenté l'avantage de permettre un certain angle d'inclinaison α entre les axes X-X et Y-Y des deux éléments tubulaires entre lesquels il est disposé. Le dispositif 35 qui sera décrit est celui disposé entre les segments 11 et 12 des figures 3 et 4.

Le dispositif d'étanchéité 35 qui permet l'inclinaison axiale de l'ensemble formé par les deux segments 11, 13 et ainsi l'articulation de ces deux segments comprend, dans l'exemple représenté, trois anneaux d'étanchéité 49 creux, souples, en un matériau élastiquement déformable, qui sont disposés chacun dans une rainure annulaire 51 pratiquée dans la face radialement extérieure 53 de l'extrémité libre du segment cylindrique 13. Les trois rainures 51 sont décalées les unes des autres dans la direction de l'axe Y-Y de ce segment. La profondeur de chaque rainure 51 est choisie de façon que seulement une partie des anneaux 49 soit reçue à l'intérieur des rainures et que les portions radialement externes fasse saillie radialement hors des rainures afin que, dans toutes les positions d'angle d'inclinaison des axes des deux segments tubulaires 11, 13, l'anneau soit appliqué, avec pression, à la fois contre le segment 13 à l'intérieur de la rainure 51, et contre la face interne en regard du segment tubulaire extérieur 11.

Chaque anneau d'étanchéité 49 est rempli d'un liquide, tel que de l'huile. La pression dans l'espace interne 55 de chaque anneau est choisie de façon que la pression interne P1 soit toujours supérieure à la pression P2 à l'extérieur du joint. Dans ces conditions, dans toutes positions de pivotement, les anneaux d'étanchéité restent en contact avec la face interne du segment tubulaire extérieur 11, ce qui assure l'étanchéité entre les deux segments articulés.

En effet, comme le montre la figure 5, si, en raison de l'inclinaison de l'élément 13 par rapport à l'élément 11, l'extrémité de l'élément 11 vient en appui en 57, c'est-à-dire en haut sur la figure 5, contre la face extérieure du segment 13, et s'écarte à l'emplacement diamétralement opposé, en 59, de la surface extérieure du segment 13, l'anneau est comprimé dans la partie supérieure de la figure, mais se dilate, sous l'impact de la pression P1 à l'intérieur de l'anneau, dans sa position inférieure, si bien qu'une application sous pression contre la face interne du segment 11 est assurée tout autour de l'anneau qui, d'autre part, est pressé contre les faces internes de la rainure 51 du segment tubulaire interne 13.

Il est à noter que tout autre dispositif d'étanchéité approprié, connu, pourrait être utilisé, le cas échéant, à la place des dispositifs 35, si l'inclinaison des segments télescopiquement engagés est négligeable.

Il s'est avéré que des agencements d'étanchéité 35, grâce au fait qu'ils permettent une inclinaison des segments sont particulièrement appropriés à être utilisés comme dispositifs d'étanchéité à articulation entre des paires de modules axialement adjacentes du système de tunnelier représenté sur les figures 1 et 2, à titre de dispositifs d'articulation A.

## Revendications

1. Agencement de joint d'étanchéité pour pièces susceptibles d'effectuer un mouvement relatif de va-et-vient, comprenant un premier élément cylindrique externe (11) solidaire de la première pièce, un deuxième élément cylindrique interne (13) solidaire de la deuxième pièce et disposé coaxialement et télescopiquement mobile à l'intérieur du premier élément, et un organe d'étanchéité (15) formé par un élément tubulaire axialement extensible et rétractable à la manière d'un accordéon et fixé à une extrémité (18) au premier élément et à l'autre extrémité (17) au deuxième élément, **caractérisé en ce que** l'organe d'étanchéité (15) est situé à l'intérieur du premier élément cylindrique (11) et à l'intérieur du second élément cylindrique (13) en étant disposé dans un espace annulaire (20) de volume variable, délimité par des chemises internes coaxiales (22, 24, 25) solidaires respectivement de l'élément interne (13) et de l'élément externe (11).

2. Agencement selon la revendication 1, dans lequel l'espace interne (20) est formé par une chemise (22) coaxiale à l'élément interne (13) et par deux chemises (24, 25) coaxiales à l'élément externe (11)

3. Agencement selon la revendication 2, dans lequel la chemise interne (22) a son extrémité adjacente à l'extrémité de l'élément interne (13) qui est fixée à cet élément interne par une bride (27), et dans lequel les deux chemises (24, 25) coaxiales à l'élément externe (11) ont leurs extrémités situées du côté de l'extrémité extérieure de l'élément externe (11) fixées à l'élément externe (11) par une cornière annulaire (32).

4. Agencement selon l'une des revendications 1 à 3, **caractérisé en ce que** l'organe d'étanchéité (15) est formé par un élément tubulaire en toile étanche pliable en accordéon, les lignes de pliage étant en forme de cercles coaxiaux à l'axe de cet élément tubulaire.

5. Agencement selon l'une des revendications 1 à 4, **caractérisé en ce que** l'espace annulaire de volume variable (20) en fonction du mouvement de va-et-vient des deux pièces précitées est rempli d'un liquide, avantageusement de l'huile, une boîte d'expansion (40) étant prévue pour recevoir l'huile chassée lors d'une rétraction de la chambre (20).

6. Agencement selon l'une des revendications 1 à 5, **caractérisé en ce qu'**un dispositif d'étanchéité (35) est interposé entre des faces en regard des deux segments cylindriques (11, 13) et des chemises (22, 25) de délimitation de l'espace annulaire (20) du logement de l'organe d'étanchéité (15).

7. Agencement selon la revendication 5, **caractérisé en ce qu'**un joint d'étanchéité (35) comporte une pluralité d'anneaux souples (49), en un matériau élastiquement déformable, qui sont disposés dans des rainures (51) pratiquées dans une des faces précitées et décalées les unes des autres dans l'axe de cette face, et en contact permanent avec la face en regard de celle qui porte les anneaux d'étanchéité.

8. Agencement selon la revendication 7, **caractérisé en ce que** l'espace interne de l'anneau est rempli d'un liquide tel que de l'huile de façon que la compression de l'anneau dans une zone sous l'effet d'un pivotement relatif entre les deux faces en regard provoque une expansion de l'anneau dans la portion périphérique diamétralement opposée à la zone de compression.

9. Agencement selon l'une des revendications 5 à 8, **caractérisé en ce que** l'organe d'étanchéité est formé par l'élément tubulaire en toile métallique étanche renforcée par une ossature métallique.

10. Système de tunnelier comportant une pluralité de modules axialement alignés dont l'un est de longueur variable, **caractérisé en ce que** le module de longueur variable (5) comporte un agencement d'étanchéité selon l'une des revendications 1 à 8.

## Patentansprüche

1. Dichtungsanordnung für Bauteile, die eine relative Hin- und Herbewegung zueinander ausführen können, mit einem ersten zylindrischen Außenelement (11), das fest mit dem ersten Bauteil verbunden ist, einem zweiten zylindrischen Innenelement (13), das fest mit dem zweiten Bauteil verbunden und innerhalb des ersten Elements koaxial angeordnet und teleskopisch verlagerbar ist, und einem Dichtungsglied (15), das aus einem rohrförmigen Element gebildet ist, das ziehharmonikaartig erweiterbar und zusammenziehbar ist und mit dem einen Ende (18) am ersten Element und mit dem anderen Ende (17) am zweiten Element (17) befestigt ist, **dadurch gekennzeichnet, dass** das Dichtungsglied (15) sich innerhalb des ersten zylindrischen Elements (11) und innerhalb des zweiten zylindrischen Elements (13) befindet und dabei in einem im Volumen veränderlichen ringförmigen Raum (20) angeordnet ist, der von koaxialen Innenmänteln (22, 24, 25) begrenzt wird, die fest mit dem Innenelement (13) bzw. mit dem Außenelement (11) verbunden sind.

2. Anordnung nach Anspruch 1, bei welcher der Innenraum (20) aus einem koaxial zum Innenelement (13) verlaufenden Mantel (22) und aus zwei koaxial zum Außenelement (11) verlaufenden Mänteln (24, 25) gebildet wird.

3. Anordnung nach Anspruch 2, bei welcher der Innenmantel (22) mit seinem Ende an das Ende des Innenelements (13) angrenzt, das über einen Flansch (27) an diesem Innenelement befestigt ist, und bei welcher die beiden koaxial zum Außenelement (11) verlaufenden Mäntel (24, 25) mit ihren Enden auf der Seite des äußeren Endes des Außenelements (11) liegen, die über ein ringförmiges Winkelprofil (32) am Außenelement (11) befestigt sind.

4. Anordnung nach einem der Ansprüche 1 bis 3, **dadurch gekennzeichnet, dass** das Dichtungsglied (15) aus einem rohrförmigen Element aus ziehharmonikaartig faltbarem, dichten Gewebe gebildet ist, wobei die Faltlinien in Form von koaxial zur Achse dieses Rohrelements verlaufenden Kreisen vorliegen.

5. Anordnung nach einem der Ansprüche 1 bis 4, **dadurch gekennzeichnet, dass** der Ringraum (20) mit in Abhängigkeit von der Hin- und Herbewegung der beiden vorgenannten Bauteile veränderlichem Volumen mit einer Flüssigkeit gefüllt ist, vorzugsweise mit Öl, wobei ein Expansionsgefäß (40) vorgesehen ist, um das beim Zusammenziehen des Raums (20) verdrängte Öl aufzunehmen.

6. Anordnung nach einem der Ansprüche 1 bis 5, **dadurch gekennzeichnet, dass** eine Dichtungsvorrichtung (35) zwischen gegenüberliegenden Flächen der beiden zylindrischen Segmente (11, 13) und den Mänteln (22, 25) zum Begrenzen des Ringraums (20) zum Aufnehmen des Dichtungsglieds (15) eingefügt ist.

7. Anordnung nach Anspruch 5, **dadurch gekennzeichnet, dass** eine Dichtung (35) eine Mehrzahl von nachgiebigen Ringen (49) aus elastisch verformbarem Material enthält, die in Rillen (51) angeordnet sind, die in einer der vorgenannten Flächen ausgebildet und entlang der Achse dieser Fläche zueinander versetzt sind und stets mit der Fläche in Kontakt stehen, die derjenigen gegenüberliegt, welche die Dichtringe trägt.

8. Anordnung nach Anspruch 7, **dadurch gekennzeichnet, dass** der Innenraum des Rings mit einer Flüssigkeit gefüllt ist, wie etwa mit Öl, so dass der Druck des Rings in einem Bereich unter der Wirkung einer relativen Schwenkbewegung zwischen den beiden gegenüberliegenden Flächen eine Erweiterung des Rings in dem Umfangsabschnitt hervorruft, der dem Druckbereich diametral entgegengesetzt ist.

9. Anordnung nach einem der Ansprüche 5 bis 8, **dadurch gekennzeichnet, dass** das Dichtungsglied aus einem Rohrelement aus dichtem Metallgewebe gebildet ist, das mit einem Metallgerippe verstärkt ist.

10. Tunnelbohreinrichtung mit einer Mehrzahl von axial fluchtenden Modulen, von denen eines in der Länge veränderlich ist, **dadurch gekennzeichnet, dass** das Modul (5) veränderlicher Länge eine Dichtungsanordnung nach einem der Ansprüche 1 bis 8 enthält.

## Claims

1. Seal arrangement for components capable of executing a relative reciprocating movement, comprising a first outer cylindrical element (11) integral with the first component, a second inner cylindrical element (13) integral with the second component and disposed in a coaxial and telescopically movable manner in the interior of the first element, and a sealing member (15) formed by a tubular element which can expand and contract axially like an accordion and which is fixed at one end (18) to the first element and at the other end (17) to the second element, **characterised in that** the sealing member (15) is situated in the interior of the first cylindrical element (11) and in the interior of the second cylindrical element (13), being disposed in an annular space (20) of variable volume delimited by coaxial inner linings (22, 24, 25) integral with the inner element (13) and the outer element (11) respectively.

2. Arrangement according to claim 1, in which the inner space (20) is formed by a lining (22) coaxial with the inner element (13) and by two linings (24, 25) coaxial with the outer element (11).

3. Arrangement according to claim 2, in which the inner lining (22) has its end adjacent to the end of the inner element (13) which is fixed to this inner element by means of a flange (27), and in which the two linings (24, 25) coaxial with the outer element (11) have their ends situated on the side of the outer end of the outer element (11) fixed to the outer element (11) by means of a ring made of angle steel (32).

4. Arrangement according to one of claims 1 to 3, **characterised in that** the sealing member (15) is formed by a tubular element made of waterproof cloth which can be accordion folded, the folding lines being in the form of circles coaxial with the axis of this tubular element.

5. Arrangement according to one of claims 1 to 4, **characterised in that** the annular space of variable volume (20) as a function of the reciprocating movement of the two aforesaid components is filled with a liquid, advantageously oil, an expansion box (10) being provided to receive the oil expelled upon the contraction of the chamber (20).

6. Arrangement according to one of claims 1 to 5, **characterised in that** a sealing device (35) is interposed between opposing faces of the two cylindrical segments (11, 13) and linings (22, 25) delimiting the annular space (20) of the housing of the sealing member (15).

7. Arrangement according to claim 5, **characterised in that** a seal (35) includes a plurality of flexible rings (49) made of an elastically deformable material disposed in grooves (51) formed in one of the aforesaid faces and offset from one another along the axis of this face, and in permanent contact with the face opposite the one carrying the sealing rings.

8. Arrangement according to claim 7, **characterised in that** the inner space of the ring is filled with a liquid such as oil in such a manner that the compression of the ring in a zone as a result of relative pivoting of the two opposing faces causes expansion of the ring in the peripheral portion diametrically opposite the compression zone.

9. Arrangement according to one of claims 5 to 8, **characterised in that** the sealing member is formed by the tubular element made of waterproof wire cloth reinforced by a metal frame.

10. Tunnelling system including a plurality of axially aligned modules, one of which is of variable length, **characterised in that** the module of variable length (5) includes a sealing arrangement according to one of claims 1 to 8.
